# EUROPEAN PATENT APPLICATION

(11) **EP 3 361 202 A1**
(43) Date of publication of application: **15.08.2018**
(21) Application number: 18461507.8
(22) Date of filing: 24.01.2018
(51) Int. Cl.: F28D 15/02, F28D 20/00, F28D 20/02

(54) **ACCUMULATION TANK AND IMPROVEMENT METHOD FOR ACCUMULATION TANK, IN PARTICULAR FOR WARM UTILITY WATER**

(30) Priority: 12.02.2017 PL 42046117; 12.02.2017 PL 42046217
(71) Applicant: SZEL - TECH Szeliga Grzegorz, 39-300 Mielec (PL)
(72) Inventor: Ba on, Pawe, 39-300 Mielec (PL); Smusz, Robert, 35-513 Rzeszów (PL); Rejman, Edward, 35-051 Rzeszów (PL)
(74) Representative: AOMB Polska Sp. z.o.o.

(57) **Abstract**

The object of the invention is an accumulation tank, in particular for warm utility water, delimited by an inner mantle (5), characterised in that it additionally comprises an outer mantle of the tank (6) and a layer of a phase-change material (7) placed between the inner (5) and the outer mantle (6). The invention also relates to an improvement method for an accumulation tank.

## Description

The object of the invention is an accumulation tank, in particular for warm utility water, using phase-change materials to accumulate heat energy. The invention also relates to an improvement method for an accumulation tank.

In known solutions involving heat storage tanks, materials accumulating heat energy are placed inside the tanks in the form of plate, oval or cylindrical vessels filled with a phase-change material.

A disadvantage of such solutions in the case of their use in systems for the preparation of warm utility water is the potential possibility of unsealing tanks filled with the phase-change material and contaminating the drinking water.

The purpose of the invention is to propose such a tank in which the risk of contaminating a liquid present therein will be minimised.

Another purpose of the invention is to propose such an improvement method for a tank in which the risk of contaminating a liquid present therein will be minimised, and which will additionally allow the improvement of existing tanks in which no phase-change material has been used so far.

The essence of the invention is an accumulation tank, in particular for warm utility water, delimited by an inner mantle, characterised in that it additionally comprises an outer mantle and a layer of a phase-change material placed between the inner and the outer mantle.

The tank may comprise a stratification arrangement, preferably made in the form of a cylindrical pipe with slits on the side surface distributed at various heights, and with a central aperture in the upper part.

Preferably, the tank comprises an at least one heat exchanger which has the form of a coil.

The tank may also comprise a heat exchanger in the form of a thermosiphon heat exchanger comprising thermal pipes with blind ends and provided with outlet and inlet spigots of the heating and heated factor, wherein in a lower part of the thermosiphon exchanger comprising the heating factor, delivered by the inlet spigot and discharged by the outlet spigot, there are placed lower heat pipes in the form of ribbed thermal pipes closed on one side by bottoms, filled with a nanoliquid, connected permanently on the other side to a lower sieve bottom which, by being connected circumferentially to an upper sieve bottom, creates a buffer zone, wherein in the upper sieve bottom, placed in the upper part of the thermosiphon exchanger comprising the heated factor delivered by the inlet spigot and discharged by the outlet spigot, there are placed upper heat pipes in the form of ribbed thermal pipes closed on one side by bottoms, filled with a nanoliquid, whereas between the heat pipes there are placed intermediate sleeves connected tightly to the thermal pipes, provided with radial apertures, connecting the inner space of the heat pipes to the buffer zone, while flanges are connected permanently to the bottoms and outer mantles closed on the top and on the bottom by end heads.

Preferably, the outer mantle of the tank covers from 50% to 70% of the lateral surface of the inner mantle.

Preferably, the outer mantle of the tank is placed in that part of the tank in which during use there is water with the highest temperature.

Preferably, it comprises a metal framework, preferably made of metal foam, placed between the inner and the outer mantle. The metal framework facilitates the exchange of heat between the inner mantle and the phase-change material.

In another aspect of the present invention, an improvement method for an accumulation tank, in particular for warm utility water, delimited by an inner mantle, involves the fact that an additional outer mantle is mounted on the tank, and a layer of a phase-change material is placed between the inner and the outer mantle.

Preferably, the outer mantle of the tank is placed so as to cover from 50% to 70% of the lateral surface of the inner mantle.

Preferably, the outer mantle of the tank is placed in that part of the tank in which during use there is water with the highest temperature.

Preferably, a metal framework, preferably made of metal foam, is placed between the inner and the outer mantle of the tank.

A preferred embodiment of the invention is presented in the drawing.

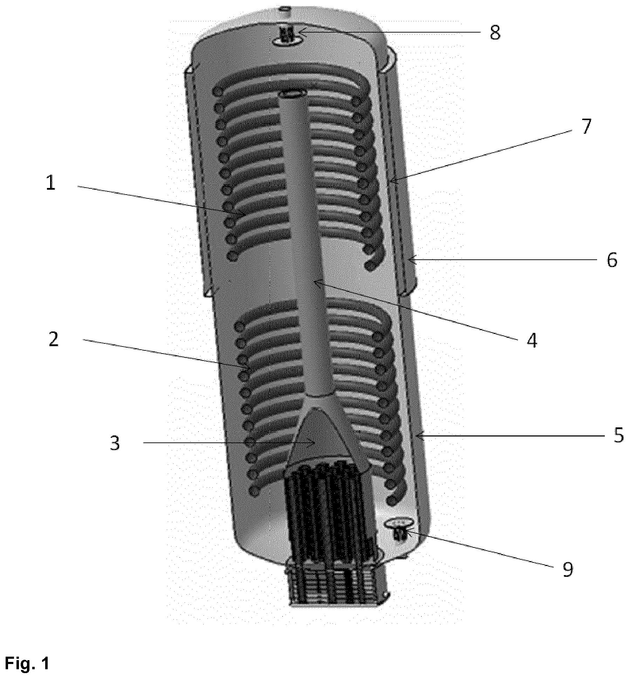

The accumulation tank presented in fig.1 is intended for use in systems for the preparation of warm utility water. In the upper part of the tank there is a water outlet 8, with a water inlet 9 in the lower part. In order to provide for a proper stratification of water temperature in the accumulation tank, a stratification arrangement 4 has been used in the form of a cylindrical pipe with slits on the side surface distributed at various heights, and with a central aperture in the upper part of the stratifier.

The space between the inner mantle 5 of the tank and the outer mantle 6 is filled with a phase-change material 7, for example a paraffin wax, which during the heating of the water in the tank changes its state of matter from solid to liquid, accumulating heat energy. A substantial advantage of the presented solution is a lasting separation of the phase-change material from drinking water and an increase in the capability of the arrangement to accumulate thermal energy.

Three heat exchangers 1,2,3 are installed inside the tank. The upper exchanger 1 and the lower exchanger 2 are made in the form of a spiral coil. The third exchanger 3 may be made as a thermosiphon exchanger according to patent PL223730, or in the form of a spiral coil, and it is used to recover waste heat from cooling or air-conditioning devices.

The exchanger according to patent PL223730 is a thermosiphon heat exchanger for hybrid heat recovery arrangements, comprising thermal pipes with blind ends, provided with outlet and inlet spigots of the heating and heated factor. In the lower part of the thermosiphon exchanger comprising the heating factor delivered by the inlet spigot and discharged by the outlet spigot there are placed lower heat pipes in the form of ribbed thermal pipes closed on one side by bottoms, filled with a nanoliquid, the heat pipes being permanently connected on the other side to the lower sieve bottom which, by being connected circumferentially to the upper sieve bottom, creates a buffer zone. In the upper sieve bottom, placed in the upper part of the thermosiphon exchanger comprising the heated factor delivered by the inlet spigot and discharged by the outlet spigot, there are placed upper heat pipes in the form of ribbed thermal pipes closed on one side by bottoms, filled with a nanoliquid. Between the heat pipes there are placed intermediate sleeves, connected tightly to the thermal pipes, provided with radial apertures, connecting the inner space of the heat pipes to the buffer space. Flanges are connected permanently to the bottoms and outer mantles, closed from the top and from the bottom by end heads.

The method according to the invention involves mounting on the tank an additional outer mantle 6 and placing in the space between the inner mantle 5 of the tank and the outer mantle 6 a phase-change material 7, for example paraffin wax, which during the heating of the water in the tank changes its state of matter from solid to liquid, accumulating heat energy. A substantial advantage of the presented solution is a lasting separation of the phase-change material from drinking water and an increase in the capability of the arrangement to accumulate thermal energy.

## Claims

1. An accumulation tank, in particular for warm utility water, delimited by an inner mantle (5), **characterised in that** it additionally comprises an outer mantle (6) and a layer of a phase-change material (7) placed between the inner (5) and the outer mantle (6).

2. The tank according to claim 1, **characterised in that** it comprises a stratification arrangement (4), preferably made in the form of a cylindrical pipe with slits on the side surface distributed at various heights, and with a central aperture in the upper part.

3. The tank according to claim 1 or 2, **characterised in that** at least one heat exchanger (1,2,3) has the form of a coil.

4. The tank according to claim 1 or 2 or 3, **characterised in that** it comprises the heat exchanger (3) in the form of a thermosiphon heat exchanger comprising thermal pipes with blind ends and provided with outlet and inlet spigots of a heating and a heated factor, wherein in the lower part of the thermosiphon exchanger comprising the heating factor, delivered by the inlet spigot and discharged by the outlet spigot, there are placed lower heat pipes in the form of ribbed thermal pipes closed on one side by bottoms, filled with a nanoliquid, connected permanently on the other side to a lower sieve bottom which, by being connected circumferentially to tan upper sieve bottom, creates a buffer zone, wherein in the upper sieve bottom, placed in the upper part of the thermosiphon exchanger comprising the heated factor delivered by the inlet spigot and discharged by the outlet spigot, there are placed upper heat pipes in the form of ribbed thermal pipes closed on one side by bottoms, filled with a nanoliquid, whereas between the heat pipes there are placed intermediate sleeves connected tightly to the thermal pipes, provided with radial apertures, connecting the inner space of heat pipes to the buffer zone, while flanges are connected permanently to the bottoms and outer mantles closed on the top and on the bottom by end heads.

5. The tank according to any one of the preceding claims, **characterised in that** the outer mantle (6) of the tank covers from 50% to 70% of the lateral surface of the inner mantle (5).

6. The tank according to any one of the preceding claims, **characterised in that** the outer mantle (6) is placed **in that** part of the tank in which during use there is water with the highest temperature.

7. The tank according to any one of the preceding claims, **characterised in that** it comprises a metal framework placed between the inner (5) and the outer mantle (6), preferably made of metal foam.

8. An improvement method for an accumulation tank, in particular for warm utility water, delimited by an inner mantle (5), **characterised in that** an additional outer mantle (6) is mounted on the tank, and a layer of a phase-change material (7) is placed between the inner (5) and the outer mantle (6).

9. The method according to claim 8, **characterised in that** the outer mantle (6) is placed so as to cover from 50% to 70% of the lateral surface of the inner mantle (5).

10. The method according to claim 8 or 9, **characterised in that** the outer mantle (6) is placed **in that** part of the tank in which during use there is water with the highest temperature.

11. The method according to claim 8 or 9 or 10, **characterised in that** a metal framework, preferably made of metal foam, is placed between the inner (5) and the outer mantle (6) of the tank.
